# EUROPÄISCHE PATENTANMELDUNG

(11) **EP 1 707 465 A2**
(43) Veröffentlichungstag der Anmeldung: **04.10.2006**
(21) Anmeldenummer: 06111431.0
(22) Anmeldetag: 21.03.2006
(51) Int. Cl.: B60T 8/40, F04B 53/10

(54) **Fördervorrichtung**

(30) Priorität: 01.04.2005 DE 102005015298
(71) Anmelder: Continental Teves AG & Co. oHG, 60488 Frankfurt am Main (DE)
(72) Erfinder: Hinz, Axel, D-61267 Neu-Anspach (DE); Vogel, Günther, 63303 Dreieich (DE); Greiff, Uwe, 61352 Bad Homburg (DE); Lenz, Renè, 60599 Frankfurt/M (DE); Köhler, Christoph, 65779 Kelkheim (DE)

(57) **Zusammenfassung**

Die Erfindung betrifft eine Fördervorrichtung für eine Fahrzeugbremsanlage, zum Fördern von Druckmittel in wenigstens eine Fahrzeugbremse, oder zum Fördern von Druckmittel in einen Druckmittelspeicher, oder zum Fördern von Druckmittel in einen Hauptbremszylinder, mit wenigstens einem, in einem Aufnahmekörper (4) bewegbar angeordneten Kolben (2) zur Verdrängung von Druckmittel aus einem Arbeitsraum (5), sowie mit wenigstens einem Rückschlagventil (9,9') zur Ventilation des Arbeitsraumes (5), und zur temporären Abtrennung einer hydraulischen Verbindung zwischen dem Arbeitsraum (5) und einem hydraulischen Kanal, wobei das Rückschlagventil (9) zumindest einen Ventilsitz (11) und einen Ventilkörper (12) aufweist.

Um einen möglichst einfachen Aufbau des Rückschlagventiles (9) zu ermöglichen, ist erfindungsgemäß vorgesehen, dass der Ventilsitz (11) aus mehreren, gesonderten, Ventilsitzsegmenten (13,14) zusammengefügt ist.

## Beschreibung

Die Erfindung betrifft eine Fördervorrichtung für eine Fahrzeugbremsanlage, zum Fördern von Druckmittel in wenigstens eine Fahrzeugbremse, oder zum Fördern von Druckmittel in einen Druckmittelspeicher, oder zum Fördern von Druckmittel in einen Hauptbremszylinder, mit wenigstens einem, in einem Aufnahmekörper bewegbar angeordneten Kolben zur Verdrängung von Druckmittel aus einem Arbeitsraum, sowie mit wenigstens einem Rückschlagventil zur Ventilation des Arbeitsraumes mittels einem Saug- oder Druckkanal, wobei das Rückschlagventil zumindest einen Ventilsitz und einen Ventilkörper aufweist.

Fördervorrichtungen für Fahrzeugbremsanlagen sind grundsätzlich bekannt. Eine teilweise aus Stanz- und Blechformteilen aufgebaute Fördervorrichtung mit Rückschlagventilen geht aus der DE 197 32 771 Al hervor. Dabei ist der Ventilsitz eines Druckventils einstückig und als Blechstanzteil ausgebildet. Der Ventilsitz ist durch eine Verstemmung auf einer Laufbuchse oder in einem Aufnahmekörper befestigt. Dies ermöglicht eine grundsätzlich kostengünstige Herstellung. Besonders dünnwandige Blechstanzteile verfügen jedoch über eine Neigung zu Verzug. Diese Neigung wird durch nachfolgende Verstemmprozesse des Ventilsitz verstärkt. Ein unkontrollierter Verzug kann bei dichtigkeitsrelevanten Bauteilen - wie insbesondere einem Ventilsitz - nicht toleriert werden. Um eine erhöhte Ausschussquote zu vermeiden, scheint daher ein besonderer Qualitätssicherungsaufwand, auch bei der Auswahl und Herstellung des Werkstoffes erforderlich.

Der Erfindung liegt die Aufgabe zu Grunde, eine vereinfachte Fördervorrichtung mit einem vereinfachten Rückschlagventil bereit zu stellen, welches unter Verwendung von Kaltschlag-Herstellungsverfahren ohne besonderen Aufwand verzugsfrei ausbildbar ist.

Die Aufgabe wird erfindungsgemäß gelöst, indem der Ventilsitz aus mehreren Ventilsitzsegmenten zusammengefügt ist. Segmentierte Ventilsitze unterliegen einem reduzierten Verzugsrisiko. Soweit überhaupt Verzug auftritt, bleibt dieser partiell auf das jeweilige Ventilsitzsegment beschränkt. Die übrigen Segmente sind von diesem partiellen Verzug weitgehend unbeeinflusst. Außerdem wird der zusätzliche Vorteil erzielt, dass sich mehrere Bauteile nach Art eines Fachwerkes gegenseitig verstärken können, so dass tendenziell weniger Werkstoff eingesetzt werden muss. Es wird die Möglichkeit eröffnet, unterschiedliche Werkstoffe zu verwenden. Durch Verwendung verbesserter Werkstoffe kann beispielsweise das Verschleißverhalten optimiert werden, ohne den Ventilsitz jeweils einstückig aus demselben Werkstoff ausbilden zu müssen.

Die Segmentierung erstreckt sich vorteilhafter Weise auch auf eine Auflagefläche für den Ventilkörper. Die geschilderten Vorteile werden daher insbesondere auch im Bereich der Auflagefläche für den Ventilkörper realisiert.

Mit Vorteil ist vorgesehen, dass der Ventilkörper in einer Schließstellung zumindest teilweise auf den segmentierten Auflageflächen aller Ventilsitzsegmente aufliegt. Dadurch wird die Beanspruchung durch den Ventilkörper gleichmäßig auf alle Segmente verteilt. Bei einer bevorzugten Ausführungsform sind zwei Ventilsitzsegmente vorgesehen.

Die Verbohrung des Aufnahmekörpers wird vereinfacht, indem zwischen den Ventilsitzsegmenten ein Druckmitteldurchlass vorgesehen wird. Mit anderen Worten entfällt die Verbohrung von Kanälen oder Kanalabschnitten, indem diese Bestandteile bei der Herstellung der Ventilsitzsegmente einfach spanlos durch Umformen, Drücken oder Prägen mitgestaltet werden. Gleichzeitig wird der Bauraum, welcher üblicherweise in dem Aufnahmekörper für die Erstellung der entsprechenden Kanalbohrungen vorzusehen ist, eingespart.

Es ist weiterhin von Vorteil, wenn der genannte Druckmitteldurchlass längs einer Trennfuge zwischen den beiden Ventilsitzsegmenten vorgesehen ist. Denn im Bereich einer Trennfuge lassen sich die gewünschten Umform- und Prägeoperationen besonders vorteilhaft ausführen. Es wird weiterhin ermöglicht, lediglich bestimmte Ventilsitzsegmente einer kanalartigen Prägung oder Ausnehmung zu unterziehen, während andere der Ventilsitzsegmente prägungslos hergestellt werden können. Schließlich ist es ohne weiteres möglich, alle Ventilsitzsegmente mit der kanalartigen Prägung zu versehen.

Um eine korrekte Lage der Ventilsitzsegmente relativ zueinander zu ermöglichen, ist vorgesehen, dass die Ventilsitzsegmente mit Zentrierelementen zur gegenseitigen Ausrichtung versehen sind. Bei der Zentrierung kann es sich um eine Innen- oder Außenzentrierung handeln. Beispielsweise weist wenigstens ein Ventilsitzsegment einen Zapfen auf, welcher in einer Bohrung eines anderen Ventilsitzsegmentes aufgenommen ist. Generell ist die Art und Weise der gegenseitigen Ausrichtung oder Zentrierung jedoch mit unterschiedlichsten Mitteln denkbar.

Bei einer bevorzugten Ausführungsform sind die Ventilsitzsegmente in einer Stufenbohrung eines Aufnahmekörpers verstemmt vorgesehen.

Eine besonders bauraumverdichtete Variante der Erfindung verfügt über eine reduzierte Baulänge und wenige Bauteile, indem wenigstens eines der Ventilsitzsegmente zwecks Begrenzung eines Arbeitsraumes bereichsweise napfförmig ausgebildet ist, und wobei der Kolben zumindest partiell sowie in einer Totpunktlage von dem napfförmigen Bereich umgriffen wird.

In weiterer Ausgestaltung der Erfindung ist vorgesehen, dass in die Bohrung für die Ventilsitzsegmente wenigstens je ein Druckkanal und je ein Saugkanal einmünden, wobei die Kanäle zueinander koaxial oder zueinander parallel ausgerichtet sowie rechtwinklig zu einer Bewegungsachse eines Kolbens angeordnet sind.

Die Erfindung wird nachstehend anhand der Zeichnung erläutert, welche ein bevorzugtes Ausführungsbeispiel der Erfindung in größerem Maßstab zeigt:
Fig. 1a eine Fördervorrichtung im Schnitt,
Fig. 1b eine Einzelheit der Fig. 1a in größerem Maßstab,
Fig. 2 eine weitere Ausführungsform im Schnitt, und
Fig. 3 - 9 ein Rückschlagventil in einer weiteren besonderen Ausgestaltung sowie in stark vergrößertem Maßstab.

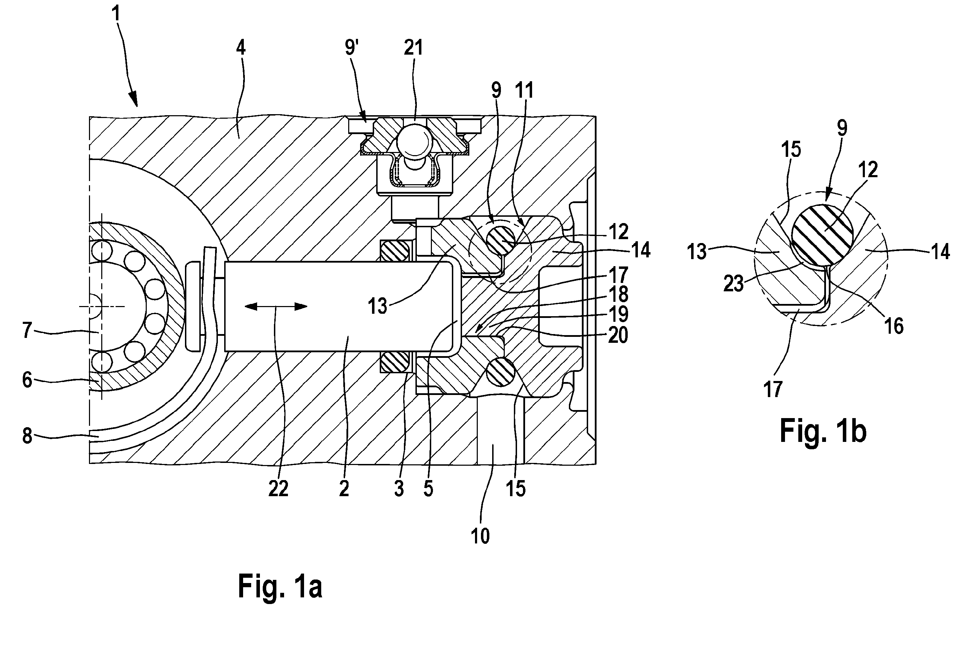

Die Fig. 1a zeigt eine Fördervorrichtung 1 deren Kolben 2 in einer abgestuften Bohrung 3 eines Aufnahmekörpers 4 bewegbar geführt angeordnet ist, welcher Bestandteil eines mit einer elektronischen Regeleinheit (ECU) versehenen elektrohydraulischen Aggregates ist. Die Führung des Kolbens 2 erfolgt unmittelbar direkt in dem Aufnahmekörper 4, oder in einer, in die Bohrung 3 eingesetzte Laufbuchse. Auch eine kombinierte Lösung ist denkbar.

Der Aufnahmekörper 4 weist ferner nicht dargestellte, elektromagnetisch ansteuerbare Ventile sowie diese miteinander verbindende, nicht gezeigte Kanäle auf, welche es erlauben, Druckmittel zur kontrollierten Druckerhöhung aus einem Arbeitsraum 5 in einen nicht gezeichneten Druckmittelspeicher oder in nicht verdeutlichte Fahrzeugbremsen zu fördern. Dadurch wird eine Fahrzeugregelbremsung, oder ein Regeleingriff wie beispielsweise ein Fahrstabilitätsregeleingriff (ESP) oder ein anderer Regeleingriff wie insbesondere eine Schlupfregelung ermöglicht.

Der Kolben 2 liegt über ein Wälzlager 6 mittelbar mit einem Ende an einem antreibenden Exzenter 7 an, welcher von einer Welle eines nicht dargestellten Elektromotors in Rotation versetzt wird. Ein Koppelring 8 verbindet jeweils zwei gegenüberliegende Kolben miteinander, und ermöglicht dadurch eine zwangsgesteuerte Rückstellung zur Ausführung eines Saughubs, wenn sich der andere der Kolben in einem Druckhub befindet.

Ein Rückschlagventil 9 (Druckventil, Saugventil 9') dient der Ventilation des Arbeitsraumes 11, indem es eine temporäre Verbindung zwischen Arbeitsraum 5 und Druck-/Saugkanal 10, 21 ermöglicht, wenn der Druck in dem Arbeitsraum einen bestimmten Grenzwert über- oder unterschreitet. Das Rückschlagventil 9, 9' umfasst einen Ventilsitz 11 mit einem Ventilkörper 12.

Wie aus Fig. 1a hervorgeht, ist der Ventilkörper 12 0-ringartig, sowie elastisch ausgebildet, was eine gesonderte Rückstellfeder erspart. Prinzipiell ist die Erfindung jedoch auch mit anderen Ventilbauformen, die gesonderte Rückstellfedern aufweisen, denkbar.

Der Ventilsitz 11 ist aus mehreren, mindestens jedoch aus zwei, Ventilsitzsegmenten 13,14 vorzugsweise mit Presssitz zusammen gefügt, die in der abgestuften Bohrung 3 des Aufnahmekörpers 4 angeordnet sind. Die beiden Ventilsitzsegmente 13,14 sind im wesentlichen zylindrisch ausgebildet und definieren gemeinsam eine V-förmige, und ringförmig umlaufende Nut oder Kerbe 15, in der der elastische, ringförmige Ventilkörper 12 vorgespannt vorgesehen ist, um in einer Grundstellung eine Auslassöffnung 16 zu verschließen. Dadurch ist der Ventilsitz 11 in einer Ebene, die rechtwinklig zu der Bewegungsachse des Ventilkörpers aufgespannt ist, geteilt ausgeführt. Unter der Wirkung einer Druckdifferenz wird der Ventilkörper 12 von seinem Ventilsitz 11 abgehoben.

Die Auflageflächen für den Ventilkörper 12 sind ebenfalls segmentiert ausgebildet. Dadurch liegt der Ventilkörper 12 - in einer Grundstellung - jeweils zumindest teilweise auf den Auflageflächen beider Ventilsitzsegmente 13, 14 auf.

Längs einer Trennfuge zwischen den Ventilsitzsegmenten 13,14 erstreckt sich ein Druckmitteldurchlass 17. Der Druckmitteldurchlass 17 ist durch wenigstens eine Ausnehmung in einem der Ventilsitzsegmente 13,14 gebildet. Diese Ausnehmung kann beispielsweise durch einfaches Einkerben oder Prägen erfolgen. Dazu bieten sich spanlose Kaltschlagverfahren an, die über den Vorteil verfügen, dass keinerlei scharfkantige Späne entstehen, welche den elastischen Ventilkörper 12 beschädigen könnten. Für größere Durchflussquerschnitte kann es vorgesehen sein, beide Ventilsitzsegmente 13,14 zur Bildung eines vergrößerten Kanalquerschnittes mit gegenüberliegenden Kerben zu versehen. In weiterer Abwandlung der Erfindung können mehrere Druckmitteldurchlässe 17 vorgesehen werden, um vergrößerte Durchflussraten zu ermöglichen.

Wie weiterhin aus der Fig. 1a hervorgeht, sind die Ventilsitzsegmente 13,14 zylindrisch-buchsenförmig, und bis auf den integrierten Druckmitteldurchlass 17 rotationssymmetrisch ausgebildet. Zentrierelemente 18 dienen einer gegenseitigen Ausrichtung. Bei der bevorzugten Ausführungsform weist wenigstens ein Ventilsitzsegment 14 einen Zapfen 19 auf, welcher in einer Bohrung 20 des anderen Ventilsitzsegmentes 13 aufgenommen ist.

Eine besonders geringe axiale Baulänge der Fördervorrichtung 1 wird erreicht, indem auf eine Rückstellfeder im Arbeitsraum verzichtet wird. Statt dessen ist der Koppelring 8 vorgesehen. Ein weiterer Beitrag zur Miniaturisierung besteht darin, dass eines der Ventilsitzsegmente 13 zwecks Begrenzung des Arbeitsraumes 5 bereichsweise napfförmig ausgebildet ist, und dass der Kolben 2 zumindest partiell sowie in einer Totpunktlage von dem napfförmigen Bereich umgriffen wird. Dadurch taucht der Kolben 2 zumindest teilweise in das Ventilsitzsegment 13 ein. Dennoch ist eine relativ dicke Wandstärke der Ventilsitzsegmente 13,14 möglich, was die Verzugsfestigkeit unterstützt.

Im weiteren mündet in die Bohrung 3 für die Ventilsitzsegmente 13,14 wenigstens je ein Druckkanal 10 und je ein Saugkanal 21. Die beiden Kanäle 10,21 sind zueinander koaxial, oder wie in der Fig. 1a ersichtlich zueinander parallel ausgerichtet sowie rechtwinklig zu einer Bewegungsachse 22 von dem Kolben 2.

Die Fig. 1b verdeutlicht die folgende Besonderheit. Zwischen dem Ventilkörper 12 und der Auflagefläche sind bewusste Undichtigkeiten in Form von Bypasskanälen 23 vorgesehen. Jeder Bypasskanal 23 umgeht folglich das Rückschlagventil 9, und verbindet die Druckseite mit dem Arbeitsraum 5. Durch diese Maßnahme wird eine gezielte Leckage eingestellt, die dazu führt, dass Druckstöße und Pulsationen verringert werden können.

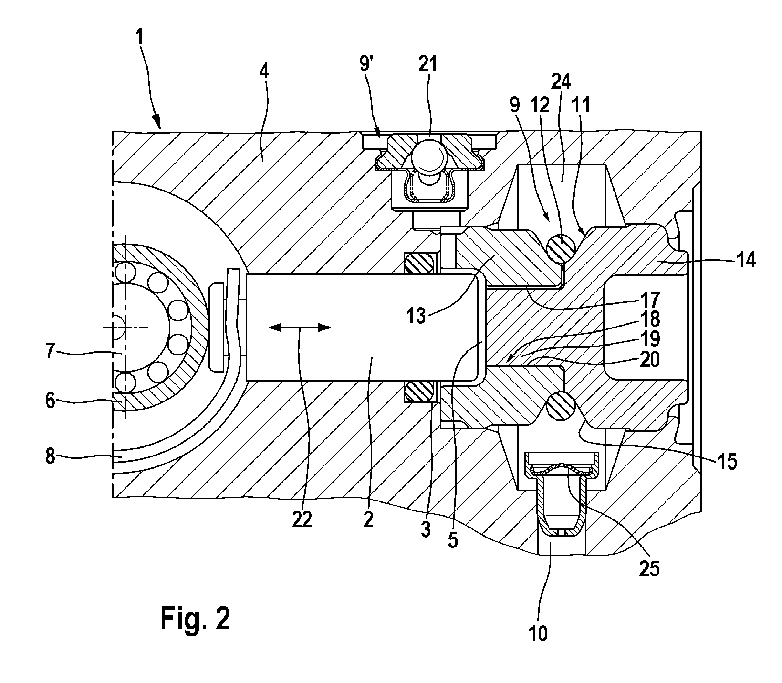

In der Fig. 2 ist eine abgewandelte Ausführungsform dargestellt. Mit Fig. 1 übereinstimmende Merkmale sind mit übereinstimmenden Bezugsziffern gekennzeichnet. Im Unterschied zu der Fig. 1a ist eine ringförmige Dämpfungskammer 24 vorgesehen, welche das Rückschlagventil 9 umgibt. Dem Druckkanal 10 ist ein Filter oder Sieb 25 vorgeschaltet.

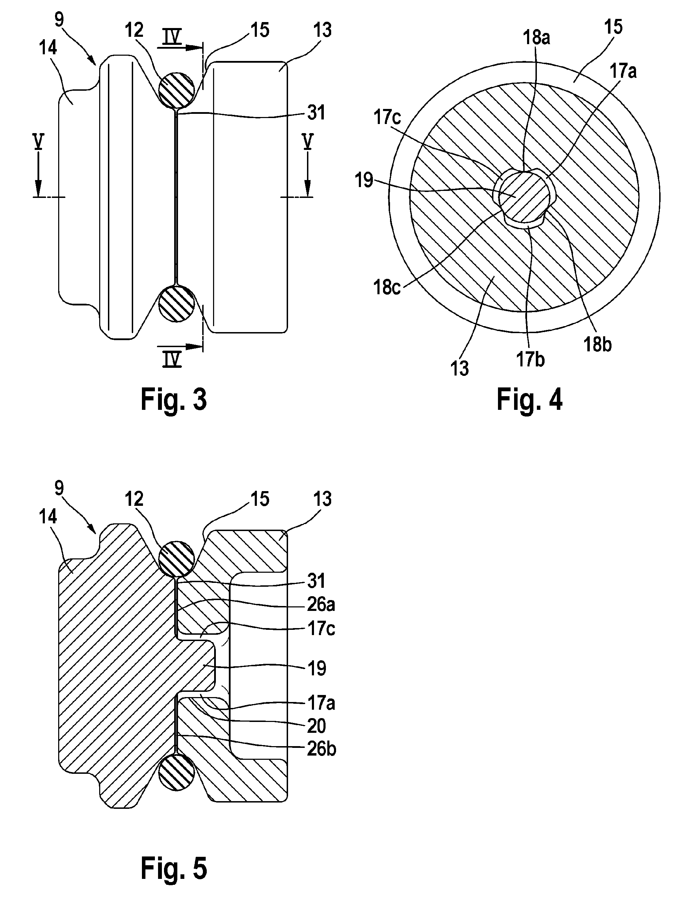

Den Figuren 3 bis 9 sind Einzelheiten bei einer Ausführungsform von einem Rückschlagventil entnehmbar, dessen Kanalführung und Ventilsitzgestaltung besonders widerstandsarm und für die Verwendung von einem elastischen, o-ringartigen Ventilkörper 12 optimiert worden ist. Merkmale die mit den vorstehenden Figuren übereinstimmen sind mit übereinstimmenden Bezugsziffern gekennzeichnet.

Eine erste Besonderheit dieser strömungsoptimierten Ausführungsform ist insbesondere aus Fig. 4 ersichtlich und besteht darin, dass der axial gerichtete, und in einer Trennfuge zwischen den Ventilsitzsegmenten 13,14 angeordnete Druckmitteldurchlass 17 vervielfacht ist. Eine ungerade Anzahl von Druckmitteldurchlässen ist aus nachstehenden Gründen besonders zu empfehlen. Vorzugsweise sind drei oder mehr regelmäßig verteilte Druckmitteldurchlässe 17a,17b,17c vorgesehen. Die Druckmitteldurchlässe 17a,17b,17c sind in ihrem Querschnitt - insbesondere auch in Umfangsrichtung - derart groß ausgebildet, dass jeweils zwischen benachbarten Druckmitteldurchlässen 17a,17b,17c gerade noch hinreichend Platz für die regelmäßig vorgesehenen Zentrierelemente 18a,18b,18c vorliegt, anhand derer auch ein Presssitz bewirkt werden kann. Die Zentrierelemente 18a,18b,18c wiesen demzufolge ebenfalls eine ungerade Anzahl auf. Aus Fig. 4 ist deutlich ersichtlich, dass schwerpunktmäßig eine großer Durchflussquerschnitt ermöglicht wird. Die Verwendung einer ungeraden Anzahl von Druckmitteldurchlässen 17a,17b,17c und Zentrierelementen 18a,18b,18c ist besonders hervorzuheben, weil dies eine kostengünstige und dennoch präzise und statisch bestimmte Zentrierung der beiden Ventilsitzsegmente 13,14 zueinander ermöglicht. In einer einfachsten Ausführungsform sind daher jeweils drei der vorgenannten Merkmale vorzusehen. Aus fertigungstechnischen Gründen spricht einiges dafür, Druckmitteldurchlässe 17a,b,c und Radialabschnitte 26a,b nicht gemeinsam an demselben Ventilsitzsegment 13,14 vorzusehen, sondern diese Maßnahme auf die beteiligten Bauteile zu verteilen.

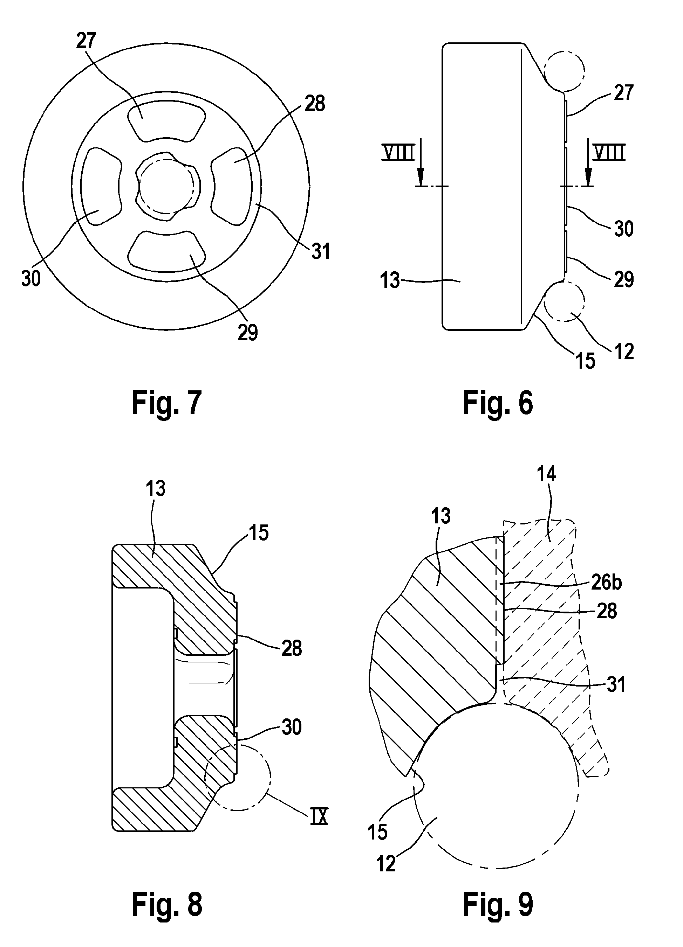

Eine zweite Besonderheit der Ausführungsform nach den Figuren 3 bis 9 besteht darin, dass Radialabschnitte 26a,26b der Druckmitteldurchlässe 17a,17b,17c ermöglicht werden, indem stirnseitig zwischen den Ventilsitzsegmenten regelmäßig verteilte Anschläge 27,28,29,30 vorgesehen sind, die in Axialrichtung vorstehen. Die Anschläge können eine gerade oder ungerade Anzahl aufweisen. Vorzugsweise sind die Anschläge an einem der Ventilsitzsegmente 13,14 angeordnet, so dass das benachbarte Ventilsitzsegment 13,14 mit einer planen Anschlagfläche versehen werden kann. In den Figuren 6,7,8 und 9 sind die genannten Anschläge 27,28,29,30 besonders deutlich zu erkennen.

Eine Dritte Besonderheit, die insbesondere aus Fig. 9 hervorgeht, trägt zu einer gesteigerten Dauerfestigkeit des elastischen Ventilkörpers 12 bei. Demnach münden die einzelnen Radialabschnitte 26a,26b noch vor dem Ventilkörper in einen umlaufenden Ringkanal 31 der es ermöglicht, dass die Druckdifferenz nicht punktuell sondern flächig an dem Ventilkörper 12 angreift. Diese Maßnahme trägt erheblich zu Lebensdauersteigerung des Ventilkörpers 12 bei und reduziert weiterhin den Strömungswiderstand.
- 1: Fördervorrichtung
- 2: Kolben
- 3: Bohrung
- 4: Aufnahmekörper
- 5: Arbeitsraum
- 6: Wälzlager
- 7: Exzenter
- 8: Koppelring
- 9,9: Rückschlagventil
- 10: Druckkanal
- 11: Ventilsitz
- 12: Ventilkörper
- 13: Ventilsitzsegment
- 14: Ventilsitzsegment
- 15: Kerbe
- 16: Auslaßöffnung
- 17,a,b,c: Druckmitteldurchlass
- 18,a,b,c: Zentrierelement
- 19: Zapfen
- 20: Bohrung
- 21: Saugkanal
- 22: Bewegungsachse
- 23: Bypasskanal
- 24: Dämpfungkammer
- 25: Filter
- 26a,b: Radialabschnitt
- 27,28,29,30: Anschlag
- 31: Ringkanal

## Patentansprüche

1. Fördervorrichtung für eine Fahrzeugbremsanlage, zum Fördern von Druckmittel in wenigstens eine Fahrzeugbremse, oder zum Fördern von Druckmittel in einen Druckmittelspeicher, oder zum Fördern von Druckmittel in einen Hauptbremszylinder, mit wenigstens einem, in einem Aufnahmekörper (4) bewegbar angeordneten Kolben (2) zur Verdrängung von Druckmittel aus einem Arbeitsraum (5), sowie mit wenigstens einem Rückschlagventil (9,9') zur Ventilation des Arbeitsraumes (5), und zur temporären Abtrennung einer hydraulischen Verbindung zwischen dem Arbeitsraum (5) und einem hydraulischen Kanal, wobei das Rückschlagventil (9,9') zumindest einen Ventilsitz (11) und einen Ventilkörper (12) aufweist **dadurch gekennzeichnet, dass** der Ventilsitz (11) aus mehreren Ventilsitzsegmenten (13,14) zusammengefügt ist.

2. Fördervorrichtung nach Anspruch 1, **dadurch gekennzeichnet, dass** die Ventilsitzsegmente (13,14) eine segmentierte Auflagefläche für den Ventilkörper (12) aufweisen.

3. Fördervorrichtung nach Anspruch 2, **dadurch gekennzeichnet, dass** der Ventilkörper (12) in einer Schließstellung zumindest teilweise auf den segmentierten Auflageflächen aller Ventilsitzsegmente (13,14) aufliegt.

4. Fördervorrichtung nach Anspruch 1, **dadurch gekennzeichnet, dass** zwei Ventilsitzsegmente (13,14) vorgesehen sind.

5. Fördervorrichtung nach Anspruch 1, **dadurch gekennzeichnet, dass** zwischen den Ventilsitzsegmenten (13,14) ein Druckmitteldurchlass (17) vorgesehen ist.

6. Fördervorrichtung nach Anspruch 5, **dadurch gekennzeichnet, dass** der Druckmitteldurchlass (17) längs einer Trennfuge zwischen den beiden Ventilsitzsegmenten (13,14) vorgesehen ist.

7. Fördervorrichtung nach Anspruch 5 oder 6, **dadurch gekennzeichnet, dass** der Druckmitteldurchlass (17) mittels wenigstens einer Ausnehmung in einem der Ventilsitzsegmente (13,14) gebildet ist.

8. Fördervorrichtung nach Anspruch 5 oder 6, **dadurch gekennzeichnet, dass** der Druckmitteldurchlass (17) durch Ausnehmungen in allen Ventilsitzsegmenten (13,14) gebildet ist.

9. Fördervorrichtung nach einem der Ansprüche 5 bis 8, **dadurch gekennzeichnet, dass** eine ungerade Anzahl von Druckmitteldurchlässen (17a,17b,17c) vorgesehen ist.

10. Fördervorrichtung nach einem der Ansprüche 5 bis 9, **dadurch gekennzeichnet, dass** zwischen den Ventilsitzsegmenten (13,14) Anschläge (27,28,29,30) vorgesehen sind, um Radialabschnitte (26a,26b) der Druckmitteldurchlässe (17a,17b,17c) auszubilden.

11. Fördervorrichtung nach Anspruch 10, **dadurch gekennzeichnet, dass** die Radialabschnitte (26a,26b) in einen umlaufenden Ringkanal (31) einmünden, um eine flächige Ventikörperbeanspruchung zu ermöglichen.

12. Fördervorrichtung nach wenigstens einem der vorhergehenden Ansprüche 1 bis 11, **dadurch gekennzeichnet, dass** die Ventilsitzsegmente (13, 14) als Kaltschlagteile ausgebildet sind, und dass die Ausnehmungen als Prägungen vorgesehen sind.

13. Fördervorrichtung nach Anspruch 1, **dadurch gekennzeichnet, dass** die Ventilsitzsegmente (13,14) mit Zentrierelementen (18,a,b,c) zur gegenseitigen Ausrichtung versehen sind.

14. Fördervorrichtung nach Anspruch 13, **dadurch gekennzeichnet, dass** eine ungerade Anzahl von Zentrierelementen (18a,18b,18c) vorgesehen ist, und dass die Zentrierelemente (18a,18b,18c) in Umfangsrichtung zwischen Druckmitteldurchlässen (17a,17b,17c) angeordnet sind.

15. Fördervorrichtung nach Anspruch 13, **dadurch gekennzeichnet, dass** wenigstens ein Ventilsitzsegment (14) einen Zapfen (19) aufweist, welcher in einer Bohrung (20) des anderen Ventilsitzsegmentes (13) aufgenommen ist.

16. Fördervorrichtung nach Anspruch 1, **dadurch gekennzeichnet, dass** die Ventilsitzsegmente (13,14) in einer abgestuften Bohrung (3) eines Aufnahmekörpers (4) vorgesehen sind.

17. Fördervorrichtung nach Anspruch 1, **dadurch gekennzeichnet, dass** eines der Ventilsitzsegmente (13) zwecks Begrenzung des Arbeitsraumes (5) bereichsweise napfförmig ausgebildet ist, und dass der Kolben (2) zumindest partiell sowie in einer Totpunktlage von dem napfförmigen Bereich umgriffen wird.

18. Fördervorrichtung nach Anspruch 16, **dadurch gekennzeichnet, dass** in die Bohrung (3) für die Ventilsitzsegmente (13,14) wenigstens je ein Druckkanal (10) und je ein Saugkanal (21) einmünden, wobei die Kanäle zueinander koaxial oder zueinander parallel ausgerichtet sowie rechtwinklig zu einer Bewegungsachse (22) des Kolbens (2) angeordnet sind.
